# EUROPEAN PATENT APPLICATION

(11) **EP 0 873 684 A2**
(43) Date of publication of application: **28.10.1998**
(21) Application number: 98303183.2
(22) Date of filing: 24.04.1998
(51) Int. Cl.: A01K 39/01

(54) **Bird-feeding station**

(30) Priority: 25.04.1997 SI 9700108
(71) Applicant: Miha, Klinar, 1000 Ljubljana (SI)
(72) Inventor: Miha, Klinar, 1000 Ljubljana (SI)
(74) Representative: Fenlon, Christine Lesley

(57) **Abstract**

A bird-feeding station (KE) has a carrying rod (1) fitted out with an eccentric vertical hole, a co-axial hole through a spring (3), which is, together with slat (2), glued onto rod (1), a movable longitudinal weight (7) on the shorter (left) end, and a feeding unit (6) on the longer (right) end, and is suspended from a fixing wedge with a knitted steel wire (4). The position of rod (1) on the knitted steel wire (4) with a weight, which keeps the knitted steel wire strung out, is determined by the position of support clip (8). Weight (7) on the transverse rod (1) and spring (3) enable an immediate re-establishment of balance and horizontal position of the rod (1). Such a bird-feeding station can solve the problem of supplying only certain bird species with food, may be inaccessible to cats and other predators, and can reduce the possibility of transference of parasites from one bird to another.

## Description

The present invention relates to a bird-feeding station.

In order to feed birds, people usually hang out suet and bird cakes, or use various kinds of bird feeders, suspended from a branch or fixed on a pole at an adult person's height. The deficiency of suspended bird cakes and suet, on which bigger and smaller birds can feed, is that we cannot determine which bird species we would supply with food. The other commonly used form of bird feeder is suspended from a branch or a house beam and is unsuitable because cats and other predators can steal towards it and hunt the birds while feeding. Various kind of bird feeders, fixed on a pole, are also easily approachable to cats, weasels and martens. A large concentration of birds in traditional bird feeders increases the possibility of transference of parasites from one bird to another.

Accordingly, it is desirable to provide a bird-feeding station for outdoor use, which is adjusted to certain bird size and which enables various alimentary products, such as bird cakes, suet, various fruit, seeds, or other foodstuff that attracts birds, to be hanged. Preferably, the design of bird-feeding station should be such that feeding of undesired bird species is avoided, and has to ensure safety from various species of predators, such as cats, weasels, martens, and other predators, that could threaten birds while feeding. In addition to these characteristics, it should preferably be easy to mount, maintain and fill with food. Also, the bird-feeding station should preferably be adaptable to provision of smaller or greater flock of birds in an easy manner. Bird species are especially endangered in winter, because it is not easy for them to find food in snow, and it is therefore preferred that snow would not heap up on the bird-feeding station.

In a bird-feeding station embodying the present invention a transverse carrying rod is fitted out with an eccentric vertical hole, a spring, through which there is a co-axial hole, together with a slat, glued onto the rod, a movable longitudinal weight is provided on the shorter (left) end, and a feeding unit on the longer (right) end, and is suspended from a fixing wedge with a knitted steel wire. The position of the rod on the knitted steel wire with a weight, which keeps the knitted steel wire strung out, is determined by the position of a support clip.

The weight on the transverse rod and the spring enable an immediate re-establishment of balance and horizontal position of the rod.

Reference will now be made, by way of example, to the accompanying drawings, in which:

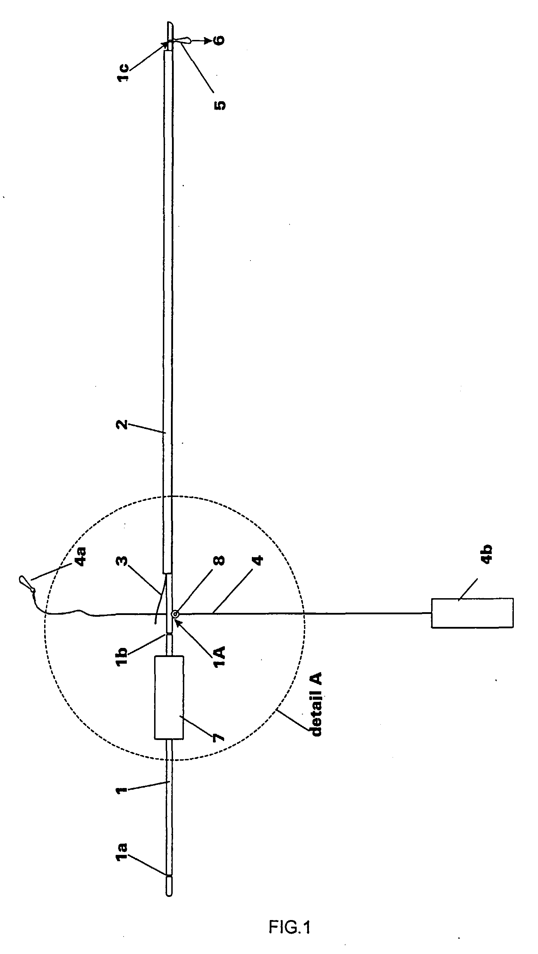

Fig. 1 shows a front view of a bird-feeding station embodying the present invention;

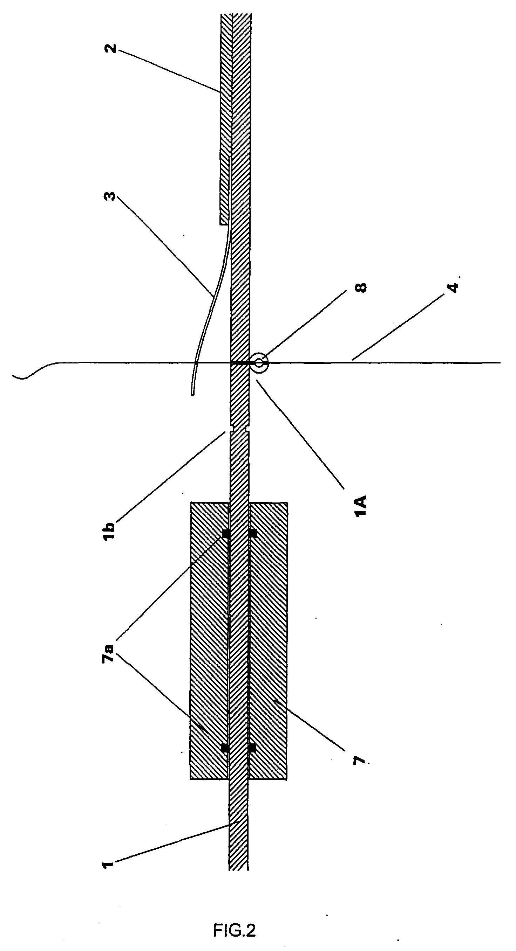

Fig. 2 shows detail A of Fig. 1;

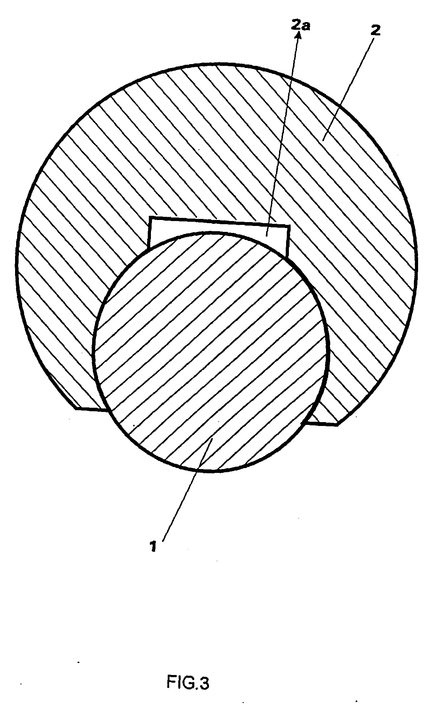

Fig. 3 shows a transverse sectional view of part of the bird-feeding station of Fig. 1;

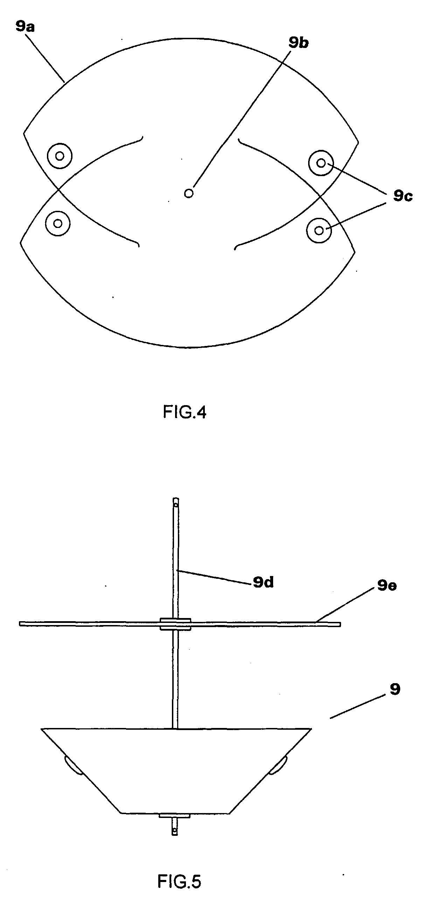

Fig. 4 shows a view of part of a feeding unit; and
Fig. 5 shows a view of a feeding unit.

A bird-feeding station embodying the present invention comprises a carrying rod 1 having a circular shape and a cylindrical hole through a supporting point 1A, which is approximately on one third of the length of rod 1. Groove 1a is placed close to the left end of rod 1, and an o-ring 7a of a weight 7 strands there as the weight comes into the marginal position. Close to the supporting point 1A is groove 1b, which restricts weight 7 to move too far to the right of rod 1. Weight 7 is placed onto rod 1 in a way that it can freely move in a longitudinal direction, but can also be moved manually in regard of the size and the weight of feeding unit 6. Weight 7 is cylindrically shaped, but can also have a conical, circular or rectangular shape.

The left end of a long slat 2 is placed close to supporting point 1A. Slat 2 and a spring 3 are glued onto rod 1 with a two-component glue. Slat 2 has a circular profile and a longitudinal groove, which is somewhat bigger than the exterior profile of rod 1, and its closely to the top of rod 1 (picture 3 ). On the left side of slat 2 is a rectangular groove 2a where the inner part of spring 3 is placed. Spring 3 is shaped like a rectangular lamella, which is turned upwards and has a hole through the turned section for the knitted steel wire 4. On the right end of rod 1 there is hole 1c for a karabiner 5, from which a feeding unit 6 is to be suspended. Feeding unit 6 can be a bird cake, suet, or cup 9 with seeds.

The bottom side of rod 1 is lying on a support clip 8, which is mounted on a knitted steel wire 4. The knitted steel wire, which leads through the cylindrical hole of rod 1 and the co-axial hole of spring 3, is suspended with a karabiner 4a from the holder of the bird-feeding station. On the bottom end of knitted wire 4 is a weight 4b, which makes the knitted wire 4 strung out, and thus gives support to spring 3 to stabilize rod 1. Support clip 8 is a cylindrical element, which is fixed to the selected spot of knitted steel wire 4 with a grub screw. Curved surface 9a of cup 9 forms a cup for seeds when both parts of snap-fasteners 9c, the kind used in the garment industry, are pressed together on both sides. Vertical stick 9d, which carries a flat roof 9e, is placed through hole 9b. Stick 9d is fixed into karabiner 5 through the hole on the top.

A bird-feeding station embodying the present invention is designed for feeding only certain species of birds. Because it is suspended from a branch or another suitable place under a house or a cottage roof, it is possible for birds to alight on slat 2, close to feeding unit 6, and thus change the balance between both ends of rod 1. Rod 1 can begin to turn and even oscillate upwards or downwards because of this change in balance. Spring 3 will re-establish the balance of rod 1 in relatively short time and light-weight birds can use the bird-feeding station. If a large bird (e.g. pigeon) came, rod 1 would tilt, and the pigeon would not be able to alight on the rod. Spring 3 brings rod 1 back to its normal horizontal position after rod 1 has been released. Bird-feeding station is slightly unstable all the time and therefore shakes off most of snow flakes in case it snows, and is fit to be hanged outside.

On one knitted steel wire 4, more basic feeding units KE, which are made up of rod 1, slat 2, spring 3, feeding unit 6 and weight 7, can be placed. Position of KE is determined by support clips 8, which are fixed at various heights. In this way the capacity of bird-feeding station increases, but because basic feeding units KE can also rotate, it enables the observer to watch and identify birds and their behaviour.

Rod 1 is preferably made of aluminium. Spring 3 is preferably made of chromium-plated spring sheet metal. Slat 2 is preferably made of wood. All elements of bird-feeding station are desirably protected against corrosion.

The basic feeding unit KE may be placed on a perpendicular pillar.

Alternatively, the basic feeding unit may be placed on a horizontal carrying string, which is mounted between two vertical pillars.

The carrying rod 1 may have a longitudinal groove with transverse notches for placement of hanging weights.

## Claims

1. A bird-feeding station (KE) comprises:
a longitudinal member (1) from which a feeding unit (6), containing bird food, is suspended when the bird-feeding station (KE) is in use;
suspension means (4) for suspending the bird-feeding station (KE) at a desired location, when the bird-feeding station (KE) is in use, such that the longitudinal member (1) extends generally horizontally, which suspension means (4) are such that the longitudinal member (1) can oscillate in a vertical plane about a pivot point (1A) on the longitudinal member (1);
weight means (7) carried on the longitudinal member (1) so as to be movable, during oscillation of the longitudinal member (1), between a position (1b) adjacent to the said pivot point (1A) and a position (1a) adjacent to one end of the longitudinal member (1); and
spring means (3) attached to the longitudinal member (1) and operable, during oscillation of the longitudinal member (1), to assist in returning the longitudinal member (1) to a rest position.

2. The characteristic of bird-feeding station designed for feeding certain species of birds, it is claimed, is that the carrying rod (1) has a circular shape and a cylindrical hole through supporting point (1A), which is approximately on one third of the length of rod (1), that there is groove (1a) close to the left end of rod (1) where the o-ring (7a) of weight (7) strands as the weight comes into the marginal position, that close to the supporting point (1A) there is groove (1b), which restricts weight (7) to move too far to the right, that weight (7) is placed onto rod (1) in a way that it is longitudinally movable, that close to supporting point (1A) the left end of long sat (2), which is glued onto rod (1) with a two component glue together with spring (3), is placed, that sat (2) has a circular profile and a longitudinal groove, which is somewhat bigger than the exterior profile of rod (1), and fits closely to the top of rod (1), that on the left side of slat (2) there is a rectangular groove (2a) where the inner part of spring (3) is placed, that spring (3) has a shape of a rectangular lamella, which is turned upwards and has a hole through the turned section for the knitted steel wire (4), that on the right end of rod (1) there is cylindrical hole (1c) for carabiner (5), from which feeding unit (6) is to be suspended, that feeding unit (6) is a bird cake, suet, or cup (9) with seeds, that the bottom side of rod (1) lies on support clip (8), which is mounted on the knitted steel wire (4), which leads through the cylindrical hole of rod (l) and the coaxial hole of spring (3) and is suspended with karabiner (4a) from the holder of the birdfeeding station, that on the bottom end of knitted wire (4) there is weight (4b), which makes the knitted wire (4) strung out, that support clip (8) is a cylindrical element, which mounted with a grub screw to the selected spot ofknitted steel wire (4).

3. The characteristic of bird-feeding station according to claim 2, it is claimed, is that on one knitted steel wire (4), two to ten basic feeding units (KE), fixed in various heights with support clips (8), can be placed.

4. The characteristic of bird-feeding station according to claim 2 or 3, it is claimed, is that the basic feeding unit (KE) is mounted on a perpendicular pillar.

5. The characteristic of bird-feeding station according to claim 2 or 3, it is claimed, is that the basic feeding unit (KE) is placed on a horizontal carrying string, which is mounted between two vertical bearers.

6. The characteristic of bird-feeding station according to any one of claims 2 to 5, it is claimed, is that the carrying rod has a longitudinal groove with transverse notches for placement of hanging weights.

7. The characteristic of bird-feeding station according to claim 4, it is claimed, is that two to ten basic feedings units (KE) can be placed on the pillar in various heights.

8. The characteristic of bird-feeding station according to any one of claims 2 to 7, it is claimed, is that karabiner (5) is fastened through the hole in the upper part of stick (9d), that curved surface (9a) of cup (9) forms a seed cup when both parts of snap-fasteners (9c) are pressed together on both sides, that vertical stick (9d), which carries flat roof (9e), is placed through hole (9b).

9. The characteristic of bird-feeding station according to any one of claims 2 to 8, it is claimed, is that weight (7) has a conical, circular or a rectangular shape.
